# EUROPÄISCHE PATENTSCHRIFT

(11) **EP 1 660 336 B1**
(45) Veröffentlichungstag und Bekanntmachung des Hinweises auf die Patenterteilung: **31.10.2007**
(21) Anmeldenummer: 04764368.9
(22) Anmeldetag: 23.08.2004
(51) Int. Cl.: B60D 1/62, B60D 1/02

(54) **KUPPLUNGSVORRICHTUNG ZUR VERBINDUNG EINER ZUGMASCHINE MIT EINEM ANH NGERFAHRZEUG**
COUPLING DEVICE FOR CONNECTING A TRACTOR ENGINE TO A TRAILER VEHICLE
DISPOSITIF D'ATTELAGE PERMETTANT DE RELIER UN VEHICULE TRACTEUR A UNE REMORQUE

(30) Priorität: 28.08.2003 DE 20313469 U; 12.02.2004 DE 202004002252 U
(43) Veröffentlichungstag der Anmeldung: 31.05.2006
(73) Patentinhaber: Georg Fischer Verkehrstechnik GmbH, 78221 Singen (DE)
(72) Erfinder: Georg Fischer Verkehrstechnik GmbH, 78221 Singen (DE)
(74) Vertreter: Weiss, Wolfgang
(86) Internationale Anmeldenummer: PCT/EP2004/009386
(87) Internationale Veröffentlichungsnummer: WO 2005/028220

(56) Entgegenhaltungen:
- EP-A- 0 425 462
- EP-A- 1 116 609
- DE-A- 3 726 822

## Beschreibung

Die Erfindung bezieht sich auf eine Kupplungsvorrichtung zum Ankuppeln eines Anhängerfahrzeuges an eine Zugmaschine, aufweisend an der Zugmaschine einen Kuppelkörper mit Maulöffnung und pneumatisch betätigbarem Kuppelbolzen und am Anhänger eine Deichsel mit Zugöse für den Durchgang des Kuppelbolzens. Eine derartige Kupplungsvorrichtung ist bekannt (EP 0 425 462 A)

Es sind sog. automatische Anhängerkupplungen bekannt, bei welchen die Öse der Deichsel in die Maulöffnung des Kuppelkörpers gebracht wird und sodann pneumatisch der Kuppelbolzen betätigt wird, so dass er im angekuppelten Zustand sich im Inneren der Öse des Anhängers befindet. Bei einer solchen Kupplung müssen jedoch elektrische und pneumatische Verbindungen von Hand hergestellt werden, damit z. B. die Brems- und Fahrzeugrichtungsanzeigen kontrolliert ausgeführt und die Bremsen betätigt werden können.

Durch die vorliegende Erfindung soll eine Kupplung der eingangs genannten Art geschaffen werden, bei der es nicht mehr erforderlich ist, dass von Hand irgendwelche Verbindungsvorgänge durchgeführt werden müssen, und zwar sowohl, wenn ein Anhänger angekuppelt als auch ein Anhänger abgekuppelt werden soll.

Die mit der vorliegenden Erfindung zu lösende Aufgabe kann somit darin gesehen werden, eine Kupplung zu produzieren, bei der es nicht erforderlich ist, dass von Hand irgendwelche Verbindungsvorgänge durchgeführt werden müssen, um die elektrische und pneumatische Verbindung zwischen Anhänger und Zugmaschine herzustellen, wobei die Kupplungselemente auch Fehlausrichtungen aufnehmen können.

Erreicht wird dies durch die in den kennzeichnenden Teilen der Ansprüche angegebenen Merkmale, nämlich dadurch, dass unterhalb des Kuppelkörpers ein zur geometrischen Achse (Z-Achse) des Kuppelbolzens koaxial drehbares Rohrstück angeordnet ist, an dessen unterem Ende eine zylindrische Halbschale im Winkel von 90° zur geometrischen Achse (X₁-Achse) des Kuppelsbolzens ausgebildet ist,
ein in der Halbschale koaxial aufgenommener und koaxial (Achse X₁) zu dieser drehbarer zylindrischer Teil angeordnet ist, an dessen freiem Umfangsteil ein Block ausgebildet ist, an dessen freier Stirnseite einerseits Stifte für elektrische Verbindungen und andererseits mindestens zwei hohle Führungsbolzen zur pneumatischen und mechanischen Verbindung mit einem vom Anhänger vorstehenden Buchsenteil angeordnet sind und
der Buchsenteil unterhalb der Deichsel um zwei zueinander senkrechte Achsen verschwenkbar (Y₂ und X₂) mit dieser gelenkig verbunden ist und mit Buchsen zur Aufnahme der Stifte und Buchsen zur Aufnahme der Führungsbolzen ausgestattet ist.

Bei einer Ausführungsform der Erfindung ist auf dem Führungsbolzen ein Zwischenstück bewegbar angeordnet ist, welches Durchgänge für die Stifte aufweist.

Auch kann der Buchsenteil um seine Längsachse (X₂) in Querrichtung zur Deichsel und um seine Querachse (Y₂) parallel zur Deichsel verschwenkbar angelenkt sein.

Bei der Kupplungsvorrichtung kann vom Fahrerhaus des Zugfahrzeuges der An- und Abkupplungsvorgang durchgeführt werden, ohne dass irgendwelche Außenarbeiten erforderlich werden. Erreicht wird dies im Wesentlichen dadurch, dass sowohl an dem Kuppelgehäuse als auch an der Deichsel zusammenwirkende Buchsensteckerverbindungen vorgesehen sind, die miteinander elektrisch und pneumatisch verbunden werden können. Da normalerweise nicht davon auszugehen ist, dass das Anhängerfahrzeug in Fahrtrichtung zur Zugmaschine ausgerichtet ist, müssen die entsprechenden Kupplungselemente so angeordnet werden, dass sie Fehlausrichtungen aufnehmen können. Daher sind sowohl der Steckerteil an der Zugmaschine als auch der Buchsenteil am Anhängerfahrzeug mehrachsig bewegbar. Es liegt auf der Hand, dass die Stecker in entsprechender Weise am Anhängerfahrzeug und die Buchsen entsprechend an der Zugmaschine angeordnet werden können.

Die Erfindung wird nachstehend anhand der Zeichnung beispielsweise erläutert.
- Fig. 1: zeigt eine isometrische Darstellung der Teile der Kupplung gemäß der Erfindung kurz vor einem Kupplungsvorgang.
- Fig. 2: zeigt in verändertem Maßstab eine vertikale Schnittansicht durch die Kupplungsvorrichtung gemäß der Erfindung.
- Fig. 3: zeigt eine Draufsicht auf die Kupplungsvorrichtung, wobei Anhängerfahrzeug und Zugmaschine nicht zueinander ausgerichtet sind.
- Fig. 4: zeigt eine vertikale Schnittansicht durch den Kuppelkörper, die Maulöffnung und die Deichsel einer abgewandelten Ausführungsform der Erfindung.
- Fig. 5: zeigt eine schaubildliche Ansicht der in Fig. 4 gezeigten Teile von schräg oben her.

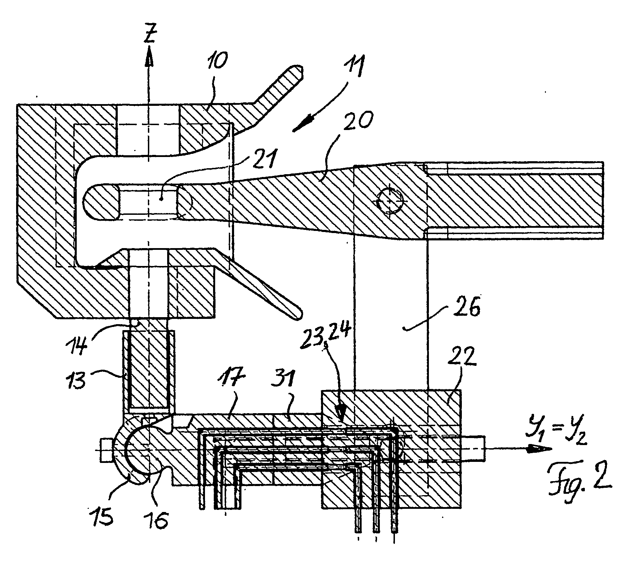

In den Figuren ist mit 10 der Kuppelkörper bezeichnet, der in bekannter Weise mit einer Maulöffnung 11 zur Aufnahme einer Deichsel 20 mit Zugöse 21 ausgebildet ist. Die idealen Verhältnisse der Anordnung dieser Teile zueinander ist in Fig. 2 zu erkennen, wobei davon auszugehen ist, dass dieser Zustand in der Praxis kaum eintritt, weil einerseits die Zugmaschine und das Anhängerfahrzeug nicht in einer gemeinsamen Richtung, in Fahrtrichtung, ausgerichet sind. Andererseits ist die Fahrbahn normalerweise nicht eben, so dass die Zugöse 21 aus der horizontalen Ebene heraus verkantet ist.

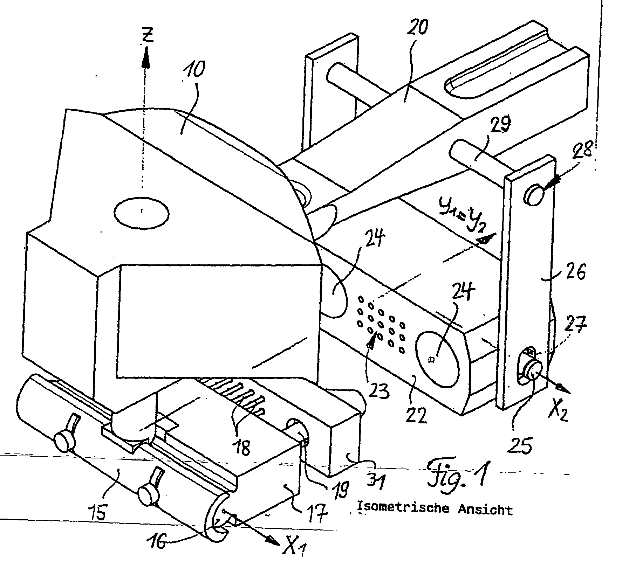

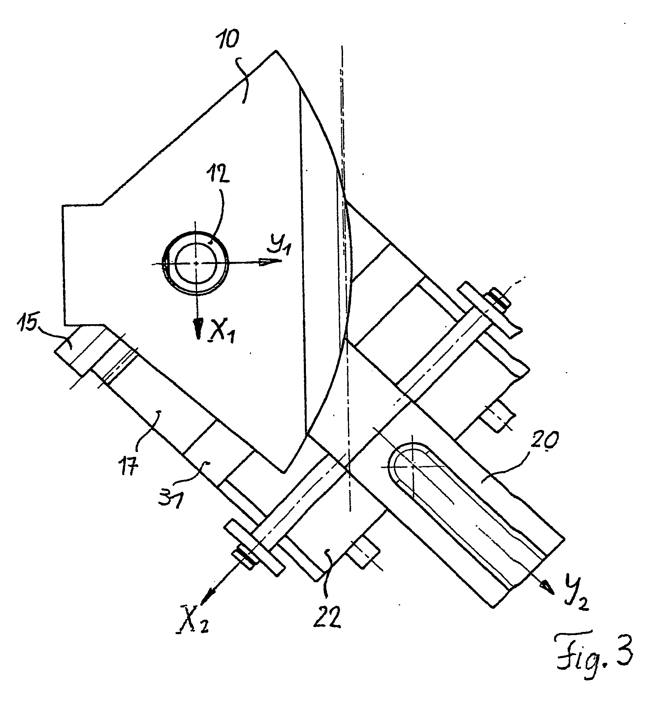

In den Figuren ist die vertikale geometrische Achse eines Zugbolzens, der in der Draufsicht nach Fig. 3 zu erkennen ist und die Bezugszahl 12 trägt, mit Z bezeichnet worden. Die dazugehörige senkrechte Richtung, die mit der Fahrtrichtung der Zugmaschine übereinstimmt, ist mit Y₁ bezeichnet worden. Die Querrichtung zur Fahrtrichtung der Zugmaschine ist mit X₁ bezeichnet worden. so dass ein räumliches Dreibein aus der Fig. 1 mit X₁, Y₁ und Z zu erkennen ist.

Unterhalb des Kuppelkörpers 10 steht ein Zapfen 14 koaxial zur Z-Achse bzw. zur Achse des Kuppelbolzens 12 nach unten vor. Auf diesem Zapfen 14 sitzt ein Tubus- oder Rohrstück 13, so dass dieses Drehbewegungen um die Z-Achse bzw. die Längsachse des Kuppelbolzens 12 ausführen kann. Das Rohrstück 13 endet im unteren Bereich mit einem Halbschalenteil 15, wobei der Innenraum der Halbschale 15 sich senkrecht zur Z-Achse erstreckt, d.h. zur Achse X₁ ausgerichtet ist, die sich quer zur Fahrtrichtung der Zugmaschine erstreckt.

In der Halbschale 15 findet ein zylindrischer Teil 16 so Aufnahme, dass er um seine Längsachse X₁ Dreh- oder Schwenkbewegungen ausführen kann. In den Figuren 1 und 2 sind Schlitze in der Schale 15 zu erkennen, durch die Schrauben hindurchgehen, die mit dem Zylinderteil 15 verbunden sind, so dass der Zylinderteil 16 fest im Innenraum des Schalenteils 15 aufgenommen ist, aber eine Schwenkmöglichkeit beider Teile zueinander besteht.

An seiner freien Stirnseite und im Wesentlichen in Richtung nach hinten, also in Richtung der Achse Y₁ ausgerichtet, ist an diesem Teilzylinder 16 ein Block 17 befestigt, der im Wesentlichen die Form eines Quaders hat. Im Inneren dieses Blocks 17 befinden sich sowohl elektrische als auch pneumatische Verbindungsleitungen. Von der nach hinten gerichteten Stirnfläche des Blocks 17 steht eine Mehrzahl von Steckerstiften 17 vor, die elektrische Verbindungen mit Buchsen 23 eingehen können. Außerdem stehen von der Stirnseite 2 Hohlbolzen 19 vor, die mit Aufnahmeteilen 24 in dem Buchsenteil 22 zusammenwirken können.

Die Hohlbolzen 19 sind im Inneren mit einer Druckluftquelle verbunden, so dass sie im eingekuppelten Zustand Druckluft von der Zugmaschine zum Anhängerfahrzeug überleiten können, um die Bremsen zu betätigen und freizugeben.

Auf den Hohlbolzen 19 sind zwei Gleitstücke oder Zwischenstücke 31 befestigt, die in Richtung der Achse Y₁ hin- und herbeweglich sind und den Vorgang des Einführens der Stecker 18 und der Hohlbolzen 19 in die zugehörigen Buchsen 23 und 24 erleichtern sollen.

An der Deichsel 20 sind am nach außen stehenden Ende zwei Stifte oder Zapfen 29 diametral zueinander befestigt, und zwar in Querrichtung zur geometrischen Achse der Deichsel. Diese Richtung der Deichsel 20 ist mit Y₂ bezeichnet. Im einwandfrei gekuppelten Zustand stimmt die Achse Y₁ mit der Achse Y₂ überein, ansonsten kann natürlich die Deichsel 20 eine beliebige andere Richtung einnehmen.

Auf dem Zapfen 29 sind zu beiden Seiten nach unten gerichtete Stäbe 26 befestigt, die um die Achse 28 der Zapfen 29 Schwenkbewegungen durchführen können.

An den unteren freien Enden der Stäbe 26 befindet sich jeweils ein Langloch 27, wobei in diesen Langlöchern zwei Zapfen 25 Aufnahme finden, die zu den beiden kleinen Seitenbegrenzungen des Buchsenteils 22 von diesem vorstehen. Die Achse der Zapfen 25 ist mit X₂ bezeichnet, wobei die Achse X₂ parallel zur Achse X₁ ausgerichtet ist, wenn der Kupplungsvorgang beendigt worden ist.

Durch die Anordnung der Zapfen 25 in den Langlöchern 27 ist es möglich, dass der Buchsenteil 22 um seine Querachse Y₂ Schwenkbewegungen durchführt und um seine Achse X₂ Drehbewegungen durchführen kann.

Der Kupplungsvorgang wird nun so durchgeführt, dass die Deichsel 20 in die Maulöffnung 11 (Fig. 2) eingeführt wird. Bei diesem Vorgang nähern sich die Teile 17 und 31 der Zugmaschine gemeinsam dem Buchsenteil 22. Da die Hohlbolzen 19 am weitesten von dem Block 17 in Richtung Y₁ vorstehen, gelangen sie zuerst in die zugehörigen Buchsen 24 des Buchsenteils 23. In Fig. 1 ist zu erkennen, dass der dort gezeigte Hohlbolzen 19 vom mit einer Konusform ausgestattet ist, um diesen Einführvorgang zu erleichtern. Bei einem weiteren Aufeinanderzubewegen des Blocks 17 mit dem Zwischenstück 31 zum Buchsenteil 22 können eine Reihe von Korrekturvorgängen durchgeführt werden. So können der Block 17 und das Zwischenstück 31 Drehbewegungen um die Z-Achse und um die Achse X₁ durchführen. Gleichzeitig kann der Block 23 um seine Achsen Y₂ und X₂ Schwenkbewegungen durchführen, so dass schließlich der Zustand erreicht werden kann, der in Fig. 2 im Schnitt gezeigt ist. Da die Teile Kuppelkörper und die Teile 17 und 31 gelenkig zueinander verbunden sind und da der Buchsenkörper 22 ebenfalls gelenkig zu den Stäben 26 und damit in Bezug auf die Deichsel 20 angeordnet ist, kann sich die Deichsel 20 auf die untere Fläche der Maulöffnung 11 auflegen und das in Fig. 2 gezeigte Viereck kann sich zu einem Paralellogramm verändern, ohne dass irgendwelche mechanischen Spannungen auftreten oder die durchgeführten elektrischen und pneumatischen Leitungsverbindungen darunter leiden.

Nicht gezeigt in den Figuren sind Endstellfühler oder -Schalter, die in Fig. 2 gezeigten Zustand an das Fahrergehäuse melden, so dass von dorther die elektrischen Verbindungen durchgeschaltet werden können und beispielsweise die Bremsen unter Druckluft gesetzt werden können.

In Fig. 3 ist die Draufsicht auf die Kupplung im eingekuppelten Zustand zu erkennen, und zwar für den Fall, dass eine erhebliche Fehlausrichtung zwischen der Fahrtrichtung des Zugfahrzeuges (Y₁-Achse) und der Ausrichtung der Deichsel 20 (Achse Y₂) vorliegt. Auch dieser Zustand ist nicht problematisch im Hinblick auf die elektrischen und pneumatischen und mechanischen Kupplungsverbindungen. Wohl aber ist beim automatischen Kuppelvorgang für den Fahrzeugführer von besonderer Bedeutung, diesen Fehlausrichtungswinkel zu kennen, um entsprechende Anfahrvorgänge einzuleiten. Zu diesem Zweck kann unterhalb des Kuppelkörpers 10 und dem Rohrstück 13 eine Winkelanzeige angeordnet sein. Bei Betrachtung der Fig. 2 ist zu erkennen, dass an dieser Stelle der Winkel zwischen diesen Teilen als Drehverstellung um die Z-Achse erfasst werden kann und in digitaler Form in das Fahrerhaus geleitet werden, so dass der Fahrer entweder von Hand die entsprechende Korrekturbewegung durchführt oder aber diese Drehverstellung zwischen Anhängerfahrzeug und Zugmaschine selbsttätig durch eine entsprechende Fahrzeugsteuerung erfasst wird.

Es sei darauf hingewiesen, dass beispielsweise diese Fehlausrichtung zwischen Deichsel und Zugmaschine im Bereich von ± 45° liegen kann, während die anderen erwähnten Dreh- oder Schwenkbewegungen im Bereich von weniger als ± 25° liegen.

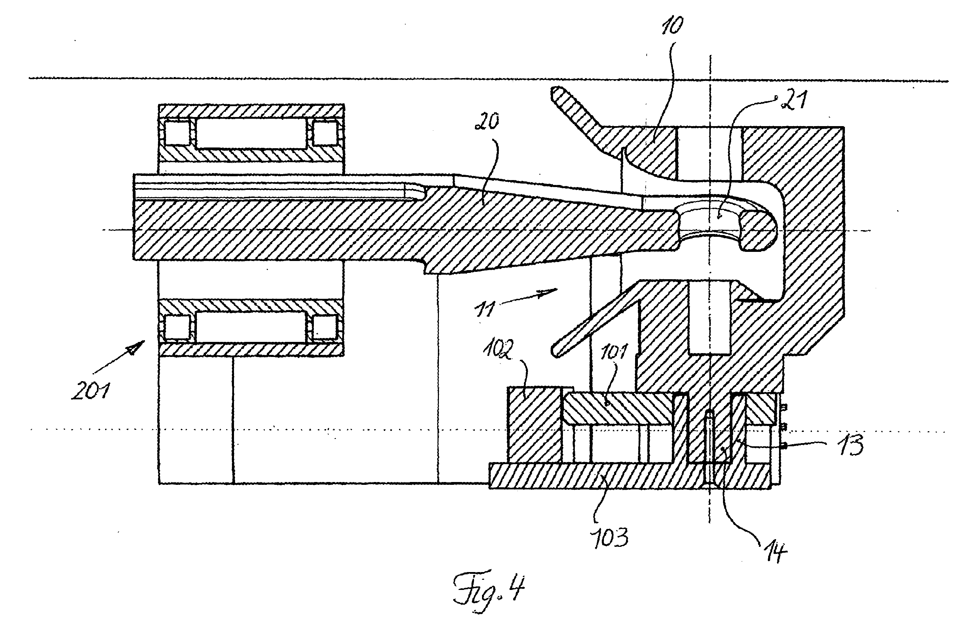

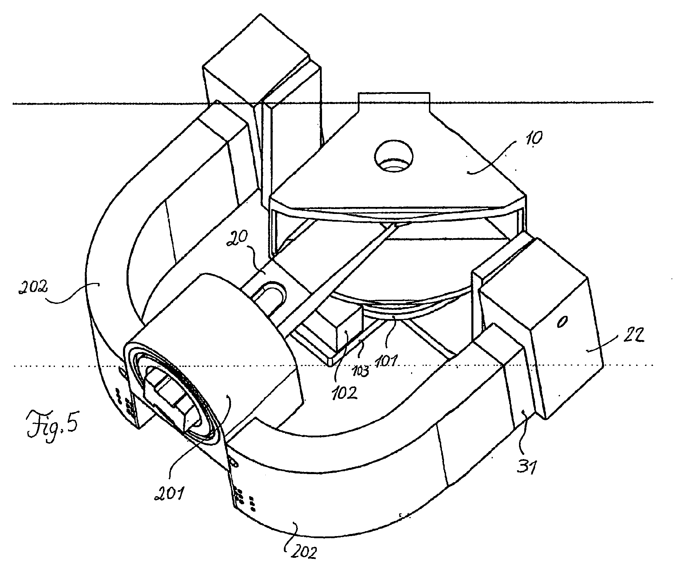

Die in Fig. 4 und Fig. 5 gezeigte Ausführungsform der Erfindung zeigt Einzelheiten der Aufhängung der miteinander zu verbindenden Teile auf der Deichsel 20. Für gleiche Teile sind die bisherigen Bezugszeichen auch dort gewählt worden.

Auf der Deichsel 20 ist ein Drehkörper 201 aufgesetzt, der um die Achse der Deichsel zu dieser konzentrische Drehbewegungen ausführen kann. Hierzu ist es lediglich notwendig, auf die Deichsel einen buchsenartigen Teil drehfest aufzusetzen, auf dem nun wiederum ein konzentrisch angeordneter Teil drehbar gehaltert ist. Dieser konzentrisch angeordnete Teil 201 ist mit zwei Armen 202 ausgestaltet, die vom Außenumfang des Teils 201 zunächst radial nach außen vorstehen und dann bogenförmig in im Wesentlichen axialparallel ausgerichtete Teile übergehen. Diese axial ausgerichteten Teile sind an ihren frei vorstehenden Enden mit den üblichen Kupplungsverbindungen ausgerichtet, die im Zusammenhang etwa mit der Fig. 2 mit 17, 31, 22 sowie 23 und 24 bezeichnet worden sind.

Wesentlich für die Funktion der Teile 201 und 202 ist, dass eine Kupplung der Teile 31 mit den Teilen 22 möglich ist, und zwar auch dann, wenn die Deichsel 20 um ihre Achse in der einen oder anderen Richtung verdreht ist. Diese Situation tritt dann auf, wenn das Anhängerfahrzeug nicht auf einer ebenen Fläche steht, sondern die eine Seite relativ zur anderen Fahrzeugseite erhöht ist.

Die Teile 202 könnten z.B. über einen Zapfen verschwenkbar an der Buchse 201 befestigt sein, oder die Teile 22 könnten über eine horizontale zur Zugmaschine in Querrichtung verlaufende gemeinsame Achse verschwenkbar sein. Auf Grund dieser kardanischen Aufhängung kann hier ein Ausgleichsvorgang stattfinden.

In Fig. 4 ist noch gezeigt, in welcher Weise die Winkelstellung erfasst werden kann, wenn nämlich das Anhängerfahrzeug und die Zugmaschine beim Kuppeln nicht in gestreckter Lage zueinander angeordnet sind. Diese Situation ist in der Fig. 5 zu erkennen, die zeigt, dass die Zugmaschine mit der Maulkupplung 10 in einem Winkel zur Achse der Deichsel 20 steht. Diese Situation entsteht dadurch, dass die Zugmaschine vor dem Kuppelvorgang eben nicht in die ausgerichete Position gebracht wurde oder werden kann, weil die Zufahrt durch ein anderes Fahrzeug gesperrt ist.

In Fig. 4 ist zu erkennen, dass auf dem sich nach unten erstreckenden Ansatz 14 des Kuppelkörpers 10 eine Buchse 13 drehbar befestigt ist, die um die Achse Z der Maulkupplung 10 drehbar ist. An der Buchse 13 ist ein radial vorstehender Teil 103 befestigt, und auf diesem ist ein kastenförmiger Sensorkopf 102 mit Hall-Sensoren angeordnet.

An dem Kuppelkörper 10 ist eine Scheibe 101 befestigt, an deren äußerem Umfang magnetische Spuren, vorzugsweise in Form eines Graycodes angeordnet sind. Da die Scheibe 101 zum Kuppelkörper 10 eine feste Lage einnimmt und da der Sensorkopf 102 sich relativ zur Achse des Kuppelkörpers 10 verdrehen kann, ist ersichtlich, dass mit Hilfe der Hall-Sensoren und der Magnetspuren der Winkel der Fehlausrichtung erfasst werden kann, wobei es sich hier um den Winkel zwischen der Fahrzeuglängsachse des Zugfahrzeuges zur Achse der Deichsel des Anhängers handelt. Dieser Winkel ist für Anfahrvorgänge nach dem Kuppelvorgang für die Zugmaschine von Bedeutung, und zwar insbesondere, wenn dieser Anfahrvorgang selbsttätig durchgeführt werden soll.

## Patentansprüche

1. Kupplungsvorrichtung zum Ankuppeln eines Anhängerfahrzeuges an eine Zugmaschine, aufweisend an der Zugmaschine einen Kuppelkörper (10) mit Maulöffnung (11) und pneumatisch betätigbarem Kuppelbolzen (12) und am Anhänger eine Deichsel (20) mit Zugöse (21) für den Durchgang des Kuppelbolzens (12), **dadurch gekennzeichnet, dass**
unterhalb des Kuppelkörpers (10) ein zur geometrischen Achse (Z-Achse) des Kuppelbolzens (12) koaxial drehbares Rohrstück (13) angeordnet ist, an dessen unterem Ende eine zylindrische Halbschale (15) im Winkel von 90° zur geometrischen Achse (X₁-Achse) des Kuppelbolzens ausgebildet ist,
ein in der Halbschale (15) koaxial aufgenommener und koaxial (Achse X₁) zu dieser drehbarer zylindrischer Teil (16) angeordnet ist, an dessen freiem Umfangsteil ein Block (17) ausgebildet ist, an dessen freier Stirnseite einerseits Stifte (18) für elektrische Verbindungen und andererseits mindestens zwei hohle Führungsbolzen (19) zur pneumatischen und mechanischen Verbindung mit einem vom Anhänger vorstehenden Buchsenteil (22) angeordnet sind und
der Buchsenteil (22) unterhalb der Deichsel (20) um zwei zueinander senkrechte Achsen verschwenkbar (Y₂ und X₂) mit dieser gelenkig verbunden ist und mit Buchsen (23) zur Aufnahme der Stifte (18) und Buchsen (24) zur Aufnahme der Führungsbolzen (19) ausgestattet ist.

2. Kupplungsvorrichtung nach Anspruch 1, **dadurch gekennzeichnet, dass** auf dem Führungsbolzen (19) ein Zwischenstück (31) bewegbar angeordnet ist, welches Durchgänge für die Stifte (18) aufweist.

3. Kupplungsvorrichtung nach einem der Ansprüche 1 oder 2, **dadurch gekennzeichnet, dass** der Buchsenteil (23) um seine Längsachse (X₂) in Querrichtung zur Deichsel (20) und um seine Querachse (Y₂) parallel zur Deichsel verschwenkbar angelenkt ist.

## Claims

1. Coupling device for coupling a trailer vehicle to a tractor, having, on the tractor, a coupling body (10) with a jaw aperture (11) and with a pneumatically actuable coupling bolt (12) and, on the trailer, a drawbar (20) with drawbar eye (21) for the passage of the coupling bolt (12), **characterized in that**,
below the coupling body (10), a tubular piece (13) is arranged which is rotatable coaxially to the geometric axis (Z-axis) of the coupling bolt (12) and at the lower end of which a cylindrical half-shell (15) is formed at an angle of 90° to the geometric axis (X₁-axis) of the coupling bolt,
a cylindrical part (16) is arranged, which is received coaxially in the half-shell (15) and is rotatable coaxially (axis X₁) to the latter and on the free circumferential part of which is formed a block (17), on the free end face of which are arranged, on the one hand, pins (18) for electrical connections and, on the other hand, at least two hollow guide bolts (19) for pneumatic and mechanical connection to a socket part (22) projecting from the.trailer, and
the socket part (22) is connected to the drawbar (20) below the latter in an articulated manner pivotably about two axes (Y₂ and X₂) perpendicular to one another and is equipped with sockets (23) for receiving the pins (18) and sockets (24) for receiving the guide bolts (19).

2. Coupling device according to Claim 1, **characterized in that** an intermediate piece (31) which has passages for the pins (18) is arranged movably on the guide bolt (19).

3. Coupling device according to either one of Claims 1 and 2, **characterized in that** the socket part (23) is articulated pivotably about its longitudinal axis (X₂) in a transverse direction to the drawbar (20) and about its transverse axis (Y₂) parallel to the drawbar.

## Revendications

1. Dispositif d'attelage permettant d'atteler une remorque à un véhicule tracteur, présentant, sur le véhicule tracteur, un corps d'attelage (10) avec une ouverture de mâchoire (11) et un boulon d'attelage (12) pneumatique, et sur la remorque, un timon (20) avec un anneau d'attelage (21) permettant le passage du boulon d'attelage (12), **caractérisé en ce que**
sous le corps d'attelage (10) est disposée une pièce tubulaire (13) pouvant tourner coaxialement à l'axe géométrique (axe Z) du boulon d'attelage (12), à l'extrémité inférieure de laquelle est réalisée une demi-coque cylindrique (15) à 90° par rapport à l'axe géométrique (axe X₁) du boulon d'attelage,
une partie cylindrique (16) reçue coaxialement dans la demi-coque (15) et pouvant tourner coaxialement à celle-ci (axe X₁) étant prévue, sa partie périphérique libre présentant un bloc (17) au niveau du côté frontal libre duquel sont disposés d'une part des broches (18) pour assurer les connexions électriques et d'autre part au moins deux boulons de guidage creux (19) pour la connexion pneumatique et mécanique avec une partie de douille (22) saillant depuis la remorque, et
la partie de douille (22) est articulée au timon (20) en dessous de celui-ci de manière à pouvoir pivoter autour de deux axes perpendiculaires l'un par rapport à l'autre (Y₂ et X₂) et est pourvue de douilles (23) pour recevoir les broches (18) et de douilles (24) pour recevoir les boulons de guidage (19).

2. Dispositif d'attelage selon la revendication 1, **caractérisé en ce qu'**une pièce intermédiaire (31) est disposée de manière mobile sur le boulon de guidage (19) et présente des passages pour les broches (18).

3. Dispositif d'attelage selon l'une quelconque des revendications 1 ou 2, **caractérisé en ce que** la partie de douille (23) est articulée de manière à pouvoir pivoter autour de son axe longitudinal (X₂) dans la direction transversale par rapport au timon (20) et autour de son axe transversal (Y₂) parallèlement au timon.
